# DEMANDE DE BREVET EUROPEEN

(11) **EP 2 977 790 A1**
(43) Date de publication de la demande: **27.01.2016**
(21) Numéro de dépôt: 15178373.5
(22) Date de dépôt: 24.07.2015
(51) Int. Cl.: G01S 19/01, H04K 3/00

(54) **DISPOSITIF DE GÉOLOCALISATION**

(30) Priorité: 24.07.2014 FR 1401698
(71) Demandeur: THALES, 92400 Courbevoie (FR)
(72) Inventeur: MONTAGNE, Bruno, 26000 VALENCE (FR); LETESTU, Franck, 26000 VALENCE (FR)
(74) Mandataire: Blot, Philippe Robert Emile

(57) **Abrégé**

Ce dispositif de géolocalisation (6) adapté pour recevoir des premiers signaux radioélectriques de positionnement issus de satellites. Chaque premier signal a une première fréquence et est généré à partir d'un premier code propre au satellite dont le premier signal est issu. Le dispositif comprend une première antenne (8) propre à recevoir un signal de géolocalisation, et une unité de traitement (10) propre à déterminer une information de positionnement du dispositif (6) en fonction du signal de géolocalisation que la première antenne (8) est propre à recevoir. Le dispositif comprend également une deuxième antenne (8) propre à émettre au moins un deuxième signal, chaque deuxième signal étant soit un signal de brouillage en émission, soit un signal de leurrage en émission et présentant un spectre fréquentiel de brouillage ou leurrage comprenant au moins l'une des premières fréquences.

## Description

La présente invention concerne un dispositif de géolocalisation adapté pour déterminer au moins une information relative à son positionnement géographique, c'est-à-dire au positionnement du dispositif de géolocalisation. Plus précisément, le dispositif de géolocalisation est adapté pour recevoir des premiers signaux radioélectriques de positionnement transmis par des satellites. Le dispositif de géolocalisation comprend une antenne de réception d'un signal de géolocalisation comprenant au moins trois des premiers signaux radioélectriques de positionnement et une unité de traitement configurée pour déterminer l'information de positionnement en fonction du signal de géolocalisation reçu.

Un tel dispositif de géolocalisation est associé à un système de géolocalisation par satellite, c'est-à-dire à un système GNSS (pour « Global Navigation Satellite System ») et est également appelé dispositif de géolocalisation GNSS. Le dispositif de géolocalisation est ainsi associé à une pluralité de satellites qui lui transmettent les premiers signaux radioélectriques de positionnement. Le dispositif de géolocalisation capte les premiers signaux de positionnement émis, de préférence, par quatre satellites et est propre en calculant les temps de propagation des premiers signaux entre les satellites correspondant et le dispositif de géolocalisation, à connaître la distance qui sépare le dispositif de géolocalisation des satellites correspondants. Le dispositif de géolocalisation est alors adapté pour situer précisément sa position suivant trois dimensions.

Le dispositif de géolocalisation est, de préférence, mobile et est utilisé à la fois dans les domaines civils et militaires. Il est apte à déterminer sa position géographique, à situer cette position sur une carte de terrain et à transmettre les informations de positionnement qu'il détermine à diverses applications permettant, par exemple, la détermination d'une route à suivre vers une destination donnée.

Pour rappel, dans les systèmes GNSS, plusieurs satellites transmettent les premiers signaux radioélectriques. Chaque premier signal est obtenu par modulation d'une porteuse par un code, dit d'étalement, auquel sont ajoutés des données propres au satellite émettant le premier signal. Le dispositif de géolocalisation, positionné sur la position à déterminer, capte les premiers signaux grâce à une antenne, puis effectue un traitement des premiers signaux via l'unité de traitement pour déterminer sa position.

Un des problèmes qui se pose dans les systèmes de géolocalisation, notamment dans le domaine militaire, est de neutraliser les dispositifs de géolocalisation dont dispose un adversaire. En effet, du fait de la faible puissance des premiers signaux, le brouillage des premiers signaux est particulièrement intéressant. Plus généralement l'objectif est soit de leurrer un adversaire sur sa position et/ou sur le temps dont il dispose, via l'émission de signaux de leurrage, soit de priver l'adversaire d'informations sur sa position et/ou sur le temps, via l'émission de signaux de brouillage.

Il est ainsi connu aujourd'hui d'utiliser des brouilleurs de forte puissance qui émettent, soit des signaux de brouillage dont le spectre fréquentiel est similaire à celui de premiers signaux transmis par les satellites et qui permettent de priver l'adversaire d'informations sur sa position et/ou sur le temps, soit des signaux de leurrage, dont les caractéristiques sont proches de celles de premiers signaux transmis par les satellites mais qui comprennent des données de leurrage.

Cependant, de tels brouilleurs sont généralement volumineux, facilement détectable et consomme une énergie électrique importante. En outre, la couverture et l'efficacité de tels brouilleurs n'est pas homogène sur un théâtre d'opération donné.

L'un des objectifs de l'invention est de pallier aux inconvénients précédemment décrits en minimisant l'énergie consommée par les brouilleurs et en améliorant la couverture d'un théâtre d'opération. Un objectif de l'invention est notamment d'améliorer l'efficacité des brouilleurs.

A cet effet, l'invention concerne un dispositif de géolocalisation adapté pour recevoir des premiers signaux radioélectriques de positionnement issus de satellites, chaque premier signal ayant une première fréquence et étant généré à partir d'un premier code propre au satellite dont le premier signal est issu, le dispositif comprenant une première antenne propre à recevoir un signal de géolocalisation comprenant, de préférence, au moins trois des premiers signaux issus de trois satellites différents, et une unité de traitement propre à déterminer une information de positionnement du dispositif en fonction du signal de géolocalisation que la première antenne est propre à recevoir. Le dispositif comprend également une deuxième antenne propre à émettre au moins un deuxième signal, chaque deuxième signal étant soit un signal de brouillage en émission, soit un signal de leurrage en émission et présentant un spectre fréquentiel de brouillage ou leurrage comprenant au moins l'une des premières fréquences.

Selon des aspects avantageux de l'invention, le procédé de contrôle comprend une ou plusieurs des caractéristiques suivantes, prises isolément ou selon toute combinaison techniquement admissible :
- les premières fréquences sont comprises dans un intervalle de fréquence prédéterminé, le dispositif comprenant un module de génération de signal propre à générer au moins un deuxième signal ayant une deuxième fréquence inférieure à toutes les premières fréquences, et un module de modification de signal propre à modifier le deuxième signal généré pour que la fréquence du deuxième signal soit égale à une troisième fréquence comprise dans l'intervalle de fréquence prédéterminé ;
- le dispositif comprend en outre un module d'antibrouillage propre à identifier et éliminer un signal de brouillage en réception et/ou un signal de leurrage en réception compris dans le signal de géolocalisation que la première antenne est propre à recevoir et un module de commutation mobile entre, une première position, dans laquelle la première antenne est connectée électriquement au module d'antibrouillage et à l'unité de traitement et, une deuxième position, dans laquelle la deuxième antenne est connectée au module de génération ;
- chaque premier signal présente un premier spectre fréquentiel et dans lequel chaque deuxième signal est un signal de brouillage en émission, le spectre fréquentiel de brouillage comprenant au moins un premier spectre fréquentiel ;
- chaque premier signal est obtenu à partir d'un signal intermédiaire résultant d'une combinaison entre d'une part, un signal de données, comprenant des données mémorisées par le satellite dont le premier signal est issu et à partir desquelles l'unité de traitement détermine l'information de positionnement, et, d'autre part, le premier code, puis par modulation d'une première porteuse par le signal intermédiaire, chaque premier code comprenant des premiers bits de code et présentant une première fréquence de code, et dans lequel chaque deuxième signal est un signal de leurrage en émission, généré à partir d'un deuxième code, le deuxième code comprenant des deuxièmes bits de code similaires aux premiers bits de code du premier code d'un premier signal correspondant et une deuxième fréquence de code égale à la première fréquence de code du premier code du premier signal correspondant ;
- l'unité de traitement est adaptée pour déterminer une première phase du premier code de chaque premier signal reçu par la première antenne, et dans lequel chaque deuxième code présente une deuxième phase différente de la première phase déterminée pour le premier signal correspondant ;
- le dispositif comprend un organe de détermination de données de leurrage, de valeurs différentes des données comprises dans le signal de données à partir duquel le premier signal correspondant est obtenu, chaque deuxième signal comprenant les données de leurrage ;
- le dispositif comprend, en outre, un premier module de sélection de premiers signaux pour obtenir des premiers signaux sélectionnés, à partir desquels l'unité de traitement est propre à déterminer l'information de positionnement, et comprenant au moins l'un parmi : un premier module de reconnaissance propre à identifier les premiers codes des premiers signaux sélectionnés, chaque deuxième signal étant obtenu à partir d'un deuxième code différent des premiers codes identifiés, et un deuxième module de reconnaissance propre à identifier la première fréquence des premiers signaux sélectionnés, chaque deuxième signal présentant une fréquence différente des premières fréquences identifiées ;
- le dispositif comprend un interrupteur commandable pour la sélection d'un mode de fonctionnement du dispositif en brouillage ou en leurrage, l'interrupteur commandable étant mobile entre, une troisième position, dans laquelle chaque deuxième signal est un signal de brouillage en émission et, une quatrième position, dans laquelle chaque deuxième signal est un signal de leurrage en émission.

L'invention concerne également un ensemble de dispositifs de géolocalisation dans lequel les dispositifs de géolocalisation sont tels que définis ci-dessus.

L'invention sera mieux comprise et d'autres avantages de l'invention apparaîtront plus clairement à la lecture de la description détaillée qui va suivre, donnée uniquement à titre d'exemple non limitatif et faite en référence aux figures annexées sur lesquelles :
- la figure 1 est une représentation schématique d'un dispositif de géolocalisation conforme à un premier mode de réalisation de l'invention ;
- la figure 2 est une représentation schématique d'un dispositif de géolocalisation conforme à un deuxième mode de réalisation de l'invention; et
- la figure 3 est une représentation schématique d'un dispositif de géolocalisation conforme à un troisième mode de réalisation de l'invention.

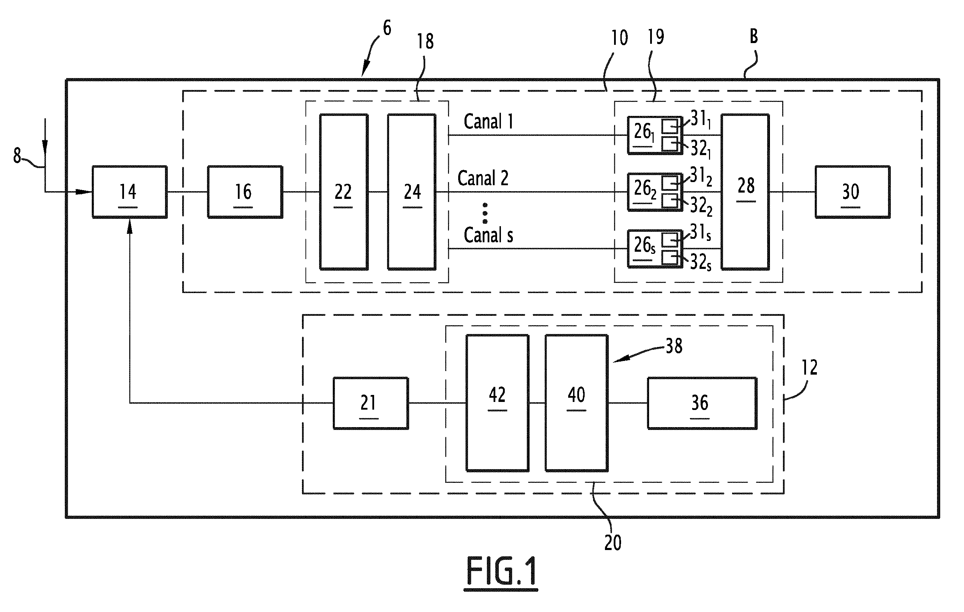

La figure 1 représente schématiquement un dispositif de géolocalisation 6 d'un système de géolocalisation par satellite suivant un premier mode de réalisation de l'invention. Le dispositif de géolocalisation 6 est un dispositif de géolocalisation GNSS, par exemple GPS (« Global Positioning System ») ou Galileo.

De manière connue en soi, le dispositif de géolocalisation 6 est adapté pour recevoir des premiers signaux S1 radioélectriques de positionnement issus de satellites non représentés. Plus précisément, le dispositif de géolocalisation 6 est propre à recevoir un signal de géolocalisation SG comprenant au moins trois des premiers signaux radioélectriques de positionnement S1 transmis par trois satellites différents.

Préférentiellement, le signal de géolocalisation SG comprend quatre des premiers signaux radioélectriques de positionnement S1, ce qui permet au dispositif de géolocalisation 6 de déterminer une information de positionnement, correspondant à sa position dans un repère tridimensionnel, et une erreur d'horloge. En effet, le dispositif de géolocalisation 6 comprend une horloge interne lui permettant d'estimer un temps proche mais non équivalent à un temps GNSS, déterminé par les satellites et plus précis. L'erreur d'horloge permet notamment d'affiner l'information de positionnement du dispositif de géolocalisation 6.

Les premiers signaux S1 ont chacun une première fréquence respective notée F1. Les premières fréquences respectives F1 sont, par exemple, comprises dans un intervalle de fréquence prédéterminé, par exemple l'intervalle [1 GHz ; 1,6 GHz], de préférence l'intervalle [1,2 GHz ; 1,5 GHz]. Par définition, une grandeur X appartient à l'intervalle [Y ; Z] si Y ≤ X ≤ Z. L'intervalle de fréquence prédéterminé correspond à un intervalle dont les deux bornes correspondent à une fréquence minimale et à une fréquence maximale pour les premiers signaux S1.

Chaque premier signal radioélectrique de positionnement S1 a un premier spectre fréquentiel compris dans un premier intervalle de fréquence, par exemple [1,4 GHz ; 1,6 GHz], de préférence [1.45 GHz ; 1,55 GHz].

Plus précisément, chaque premier signal radioélectrique S1 est obtenu à partir d'un signal intermédiaire résultant d'une combinaison entre d'une part, un signal de données et, d'autre part, un premier code propre au satellite dont le premier signal est issu, puis par modulation d'une première porteuse par le signal intermédiaire. La combinaison correspond à une addition modulo 2 du premier code et du signal de données. La modulation correspond préférentiellement à une modulation de phase, la phase de la première porteuse variant en fonction de valeurs d'amplitude du signal intermédiaire. La première porteuse présente la première fréquence F1.

Le signal de données comprend des données mémorisées par le satellite dont le premier signal S1 est issu et à partir desquelles l'unité de traitement détermine l'information de positionnement. De manière connue, les premières données sont, par exemple, des almanachs qui donnent les positions de tous les satellites de la constellation, sur plusieurs semaines, avec une précision de l'ordre de 1 km et/ou des éphémérides, qui donnent des informations sur la position du satellite dont le premier signal S1 est issu, avec une précision de l'ordre de 1 m à 10 m. Le signal de données a un débit par exemple égal à 50 bit/s ou à 125 bit/s.

Le premier code est un signal défini par des premiers bits de code, une première fréquence de code et une première phase. En d'autres termes le premier code comprend les premiers bits de code et présente une fréquence égale à la première fréquence de code et une phase égale à la première phase. La première fréquence de code est par exemple égale à 1,023 MHz. De manière connue, lorsque le dispositif de géolocalisation reçoit l'un des premiers signaux, le dispositif de géolocalisation génère un code local correspondant à une réplique du premier code et modifie la phase du code local pour que le code local suive le premier signal reçu. La première phase est alors égale à la phase du code local et le dispositif de géolocalisation est propre à calculer un déphasage subi par le premier signal reçu entre son émission par le satellite et sa réception par le dispositif de géolocalisation.

Plus généralement, les satellites émettent, par exemple, dans le cas d'un système GPS, en permanence les premiers signaux de positionnement S1 sur une première fréquence haute de 1,5 GHz et sur une première fréquence basse de 1,2 GHz. Ainsi, chaque satellite émet en permanence un premier signal haute fréquence, à la première fréquence haute de 1,5 GHz et un premier signal basse fréquence à la première fréquence basse de 1,2GHz et le dispositif de géolocalisation 6 est propre à déterminer sa position en fonction du premier signal haute fréquence et/ou du premier signal basse fréquence.

Le dispositif de géolocalisation 6 comprend une première antenne 8 de réception du signal de géolocalisation SG et une unité 10 de traitement configurée pour déterminer la position du dispositif de géolocalisation 6 en fonction du signal de géolocalisation SG reçu.

Le dispositif de géolocalisation 6 comprend un module 12 de génération de signal, propre à générer un ou des deuxième signaux S2 correspondant à un signal de brouillage en émission d'un ou d'autres dispositifs de géolocalisation, dits adversaires, et une deuxième antenne 8 d'émission des deuxièmes signaux S2, sous forme radioélectrique, en direction des dispositifs de géolocalisation adversaires. La deuxième antenne d'émission 8 porte la même référence que la première antenne de réception 8, car elles forment une même antenne globale 8.

Le dispositif de géolocalisation 6 est ainsi, d'une part, de manière connue en soi, propre à déterminer sa position mais également, d'autre part, à émettre le signal de brouillage en émission en direction de dispositifs de géolocalisation adversaires grâce au module de génération 12 et à l'antenne globale 8.

Le dispositif de géolocalisation 6 comprend également un commutateur 14 mobile entre une première position, dans laquelle le commutateur 14 relie électriquement l'antenne globale 8 à l'unité de traitement 10 et une deuxième position, dans laquelle le commutateur 14 relie électriquement l'antenne globale 8 et le module de génération 12. Le commutateur 14 est propre à être commandé à une fréquence donnée pour qu'il passe régulièrement de la première position à la deuxième position et inversement.

Le dispositif de géolocalisation 6 comprend un boîtier B dans lequel sont positionnés l'unité de traitement 10, le module de génération 12 et le commutateur 14. Le dispositif de géolocalisation 6 est adapté pour être de dimension réduite et transportable par une personne ou un véhicule. Le dispositif de géolocalisation 6, de même que le boîtier B, a par exemple un volume inférieur à 4000 cm³. Le dispositif de géolocalisation permet ainsi, par exemple, la radionavigation d'un véhicule ou d'une personne.

La première antenne de réception 8, c'est-à-dire l'antenne globale 8, est propre à transmettre le signal de géolocalisation SG à l'unité de traitement 10, via le commutateur 14.

L'unité de traitement 10 comprend un module 16 analogique de prétraitement, un module 18 de numérisation propre à effectuer une numérisation du signal de géolocalisation SG et une partie numérique de traitement 19.

Le module de génération 12 comprend un générateur 20 des deuxièmes signaux S2 et un module de modification 21 des deuxièmes signaux S2. Plus précisément, le module de génération 12 est, par exemple, adapté pour que les deuxièmes signaux S2 générés forment le signal de brouillage en émission dont un spectre fréquentiel de brouillage inclut le premier spectre fréquentiel de l'un des premiers signaux ou de plusieurs des premiers signaux, c'est-à-dire l'une des premières fréquences F1. Les deuxièmes signaux S2 sont ainsi propres à brouiller la réception des premiers signaux reçus par les dispositifs de géolocalisation adversaires qui ont leur premier spectre fréquentiel inclut dans le spectre fréquentiel de brouillage.

En d'autres termes, la deuxième antenne d'émission 8, c'est-à-dire l'antenne globale 8, est adaptée pour émettre les deuxièmes signaux S2, les deuxièmes signaux S2 correspondant ou formant le signal de brouillage en émission, dont le spectre fréquentiel de brouillage comprend au moins l'une des premières fréquences F1.

Le module de génération 12 et l'antenne globale 8 permettent de générer et d'émettre le signal de brouillage en émission en direction de dispositifs de géolocalisation adversaires, et ainsi de priver les dispositifs de géolocalisation adversaires d'informations sur leur position et/ou sur leur temps.

Le commutateur 14 permet, suivant la fréquence donnée, de commander alternativement, d'une part, l'émission du signal de brouillage, lorsqu'il est dans la deuxième position, puis, d'autre part la détermination de la position du dispositif de géolocalisation 6 lorsqu'il passe dans la première position. La fréquence donnée est, par exemple, comprise entre 1 Hz et 2,77 x 10⁻⁴ Hz.

Le module analogique de prétraitement 16 effectue une conversion en fréquence intermédiaire IF (pour « Intermediate frequency »). Le signal de géolocalisation SG, et donc chaque premier signal S1 est ainsi converti à la fréquence intermédiaire via le module analogique de prétraitement 16. Le module de prétraitement 16 comprend généralement des filtres et un oscillateur local qui permet la conversion à la fréquence intermédiaire.

Le module 18 de numérisation est propre à effectuer une numérisation du signal de géolocalisation à la fréquence intermédiaire et à fournir un signal numérisé à des canaux satellites de traitement numérique, les canaux étant notés Canal 1 à Canal S sur la figure 1. S représente le nombre de satellite considérés pour déterminer l'information de positionnement. Le module de numérisation 18 comporte un module 22 de contrôle automatique de gain, dont la sortie est fournie en entrée d'un convertisseur analogique numérique 24. Des sorties du module de numérisation 18 sont utilisées dans la partie numérique 19 du dispositif de géolocalisation 6.

La partie numérique 19 inclut un module 26₁,26₂,...26_{S} de traitement du signal numérisé pour chaque canal et un module 28 de calcul de la position du dispositif de géolocalisation 6. En sortie du module de calcul 28, des coordonnées 30 de positionnement du dispositif de géolocalisation 6 sont obtenues.

Chaque canal correspond à un satellite, c'est-à-dire à une première porteuse et à un premier code associé. Le premier code est assimilable à une clé de codage et, plus généralement, à une clé d'identification du satellite auquel il correspond.

Chaque module de traitement 26₁,26₂,...26_{S} met en oeuvre des modules de corrélation, chaque module de corrélation étant apte à calculer une fonction d'autocorrélation ACF, la détection d'un pic de corrélation dans la fonction ACF permettant d'estimer, pour chacun de canaux numériques, un retard de propagation, également appelé déphasage, entre l'instant d'émission par le satellite correspondant et l'instant de réception par le dispositif de géolocalisation 6.

De manière connue, chaque module de traitement 26₁,26₂,...26_{S} est associé à un satellite et plus précisément à l'un des premiers signaux S1 à la première fréquence F1 comprenant le premier code correspondant. Chaque module de traitement 26₁,26₂,...26_{S} comprend une boucle PLL (en anglais « Phase Lock Loop ») qui synchronise la phase d'une porteuse locale, générée localement, avec la première porteuse du premier signal S1 associé reçu et une boucle DLL (en anglais « Delay Lock Loop ») qui synchronise une séquence pseudo-aléatoire binaire, correspondant à un code local, généré localement et correspondant au satellite associé, avec le premier code du premier signal S1 associé reçu. Plus précisément, chaque module de traitement 26₁,26₂,...26_{S} comprend pour le premier signal S1 auquel il est associé, au moins un premier organe 31₁,31₂,...31_{S} de calcul de la porteuse locale et au moins un deuxième organe 32₁,32₂,...32_{S} de calcul du code local. Le code local est similaire au premier code compris dans le premier signal S1 auquel il est associé. En d'autres termes le code local comprend des bits de code local similaires aux premiers bits de code compris dans le premier signal S1 correspondant auquel il est associé et une fréquence de code local similaire à la première fréquence de code du premier signal S1 correspondant. De plus, la synchronisation du code local avec le premier code permet d'obtenir le code local avec une phase égale à la première phase. Chaque module de traitement 26₁,26₂,...26_{S} fournit, de manière connue, pour le canal satellite associé, la phase de la première porteuse et la phase du premier code en sortie des boucles décrites ci-dessus.

Le module de calcul 28 est propre à déterminer la distance entre le dispositif de géolocalisation 6 et chaque satellite notamment en fonction des données comprises dans le signal de données du premier signal S1 associé au satellite et des retards de propagation estimés par le module de traitement 26₁,26₂,...26_{S} associé au satellite, c'est-à-dire notamment des phases de la première porteuse et du premier code fournis par le module de traitement 26₁,26₂,...26_{S} associé au satellite. Le module de calcul 28 est ainsi propre à calculer la position du dispositif de géolocalisation 6 en fonction des distances déterminées.

Le générateur 20 des deuxièmes signaux S2 est propre à générer les deuxièmes signaux S2 à une deuxième fréquence F2 inférieure à toutes les premières fréquences F1. La deuxième fréquence est de préférence égale à la fréquence intermédiaire. Le générateur 20 assure la génération des deuxièmes signaux S2 à la deuxième fréquence et comprend, par exemple, une mémoire 36 propre à mémoriser les deuxièmes signaux S2 et un organe 38 de conversion. L'organe de conversion 38 comporte un convertisseur numérique analogique 40 et un module 42 de contrôle automatique de gain. Le module de contrôle de gain 42 est connecté en sortie au module de modification 21.

Le module de modification 21 des deuxièmes signaux S2 est adapté pour que les deuxièmes signaux S2 aient une troisième fréquence F3 comprise dans l'intervalle de fréquence prédéterminé. Le module de modification 21 effectue une conversion de la fréquence des deuxièmes signaux S2 de la deuxième fréquence F2 à la troisième fréquence F3. Avantageusement, le module de modification 21 est adapté pour utiliser le même oscillateur local que celui du module analogique de prétraitement 16. En sortie du module de modification, les deuxièmes signaux correspondent au signal de brouillage en émission, c'est-à-dire forment le signal de brouillage en émission dont le spectre fréquentiel de brouillage inclut le premier spectre fréquentiel de l'un des premiers signaux ou de plusieurs des premiers signaux, c'est-à-dire l'une des premières fréquences F1.

En variante, le commutateur 14 est remplacé par un dispositif de type circulateur connecté à l'unité de traitement 10, au module de génération 12 et à l'antenne globale 8 et adapté pour transmettre le signal de géolocalisation SG depuis l'antenne globale 8 vers l'unité de traitement 10 et pour transmettre les deuxièmes signaux S2 depuis le module de génération 12 vers l'antenne globale 8.

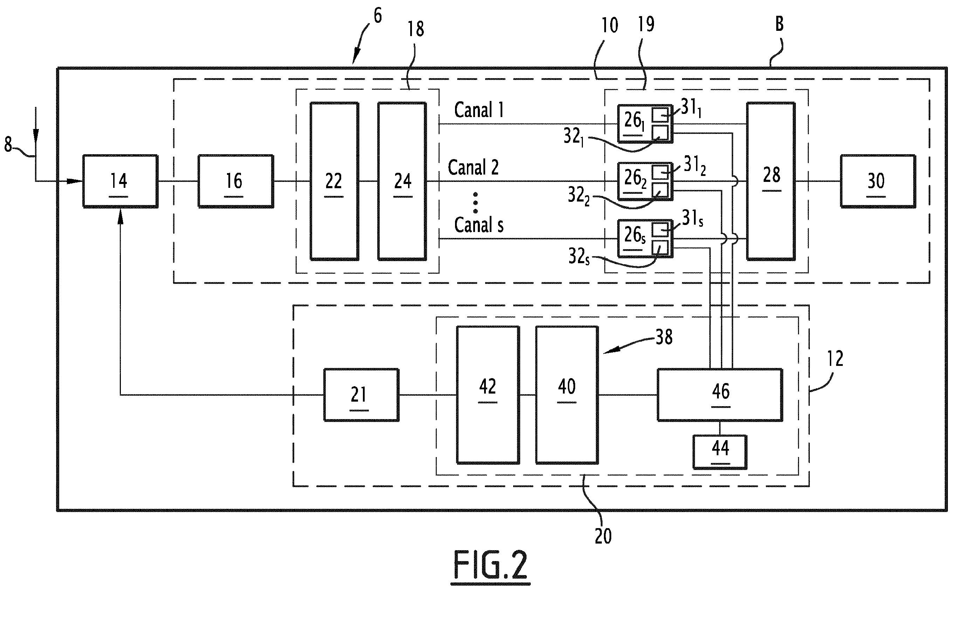

Dans un deuxième mode de réalisation de l'invention, présenté à la figure 2, les éléments similaires à ceux du premier mode de réalisation portent les mêmes références. Uniquement les différences entre le premier et le deuxième modes de réalisation seront présentées par la suite et les éléments similaires ne seront pas décrits à nouveau.

Ainsi, dans le deuxième mode de réalisation, le dispositif de géolocalisation 6 est adapté pour générer des deuxièmes signaux S2 correspondant à un signal de leurrage en émission à partir des premiers 31₁,31₂,...31_{S} et deuxièmes 32₁,32₂,...32_{S} organes de calcul des modules de traitement 26₁,26₂,...26_{S}.

Le module de génération 12 comprend un organe 44 de détermination de données de leurrage. Les données de leurrage sont propres à être intégrées dans les deuxièmes signaux S2 et sont déterminées pour que la position et/ou le temps déterminés par les dispositifs de géolocalisation adversaires, via les deuxièmes signaux S2, soient erronés et que les calculs effectués par ceux-ci soient erronés. Avantageusement, les données de leurrage ont des valeurs différentes des données comprises dans le signal de données à partir duquel le premier signal S1, pour lequel on souhaite émettre un leurre, est généré.

Le module de génération 12 est donc propre à générer le signal de leurrage en émission à partir des premiers 31₁,31₂,...31_{S} et deuxièmes 32₁,32₂,...32_{S} organes de calcul et des données de leurrage. En d'autres termes, la deuxième antenne 8, c'est-à-dire l'antenne globale 8, est propre à émettre des deuxièmes signaux S2, qui correspondent au signal de leurrage en émission vers des dispositifs de géolocalisation adversaires. Plus précisément, chaque deuxième signal S2 a, grâce à l'utilisation des premiers organes de calcul 31₁,31₂,...31_{S}, et du module de modification 21, une troisième fréquence F3 égale à la première fréquence F1 de l'un des premiers signaux pour lequel on souhaite émettre un leurre. En d'autres termes, le deuxième signal S2 présente un spectre fréquentiel de leurrage qui comprend au moins l'une des premières fréquences F1.

De plus, grâce à l'utilisation des deuxièmes organes de calcul 32₁,32₂,...32_{S}, chaque deuxième signal S2 est généré à partir d'un deuxième code, obtenu à partir du code local. Le deuxième code comprend donc des deuxièmes bits de code similaires aux premiers bits de code du premier code d'un premier signal S1 correspondant, pour lequel on souhaite émettre un leurre et une deuxième fréquence de code égale à la première fréquence de code du premier signal correspondant S1. Ceci permet de tromper les dispositifs de géolocalisation adversaires sur leur position réelle.

Avantageusement, l'unité de traitement 10 et, plus précisément les modules de traitement 26₁,26₂,...26_{S}, sont adaptés pour déterminer une première phase du premier code de chaque premier signal S1 et chaque deuxième code présente une deuxième phase différente de la première phase du premier signal correspondant S1.

Dans le deuxième mode de réalisation, la mémoire 36 est remplacée par un troisième organe de calcul 46 propre à réaliser la modulation des porteuses locales et des codes locaux associés à des satellites, c'est-à-dire à des premiers signaux S1, pour lesquels on souhaite émettre un leurre. Le troisième organe de calcul 46 est donc propre à générer les deuxièmes signaux S2 correspondant au signal de leurrage en émission. Le troisième organe de calcul 46 comprend en entrée les codes locaux et les porteuses locales déterminés par les premiers 31₁,31₂,...31_{S} et deuxièmes 32₁,32₂,...32_{S} organes de calcul, ainsi que les données de leurrage déterminées par l'organe de détermination 44. Le troisième organe de calcul 46 est configuré pour sélectionner les porteuses locales et les codes locaux correspondant aux satellites pour lesquels on souhaite émettre un leurre et pour calculer les deuxièmes signaux à partir de la modulation de chaque porteuse locale sélectionnée par le code local sélectionné correspondant, auquel il ajoute les données de leurrage. Les résultats des différentes modulations réalisées sont propres à être transmis à l'organe de conversion 38.

Le fait de générer les deuxièmes signaux à partir des premier 31₁,31₂,...31_{S} et deuxième 32₁,32₂,...32_{S} organes de calcul permet de garantir que les caractéristiques du signal de leurrage en émission, c'est-à-dire par exemple que les deuxièmes bits de codes des deuxièmes signaux S2 et la fréquence des deuxièmes signaux S2 qui le forment, sont le plus proche possible des premiers signaux transmis par les satellites pour lesquels on souhaite émettre un leurre et ainsi d'optimiser les chances de réussite du leurrage.

Avantageusement, les premier et deuxième modes de réalisation sont combinés entre eux au sein d'un même dispositif de géolocalisation. Le dispositif de géolocalisation comprend alors un interrupteur commandable par un opérateur et permettant de sélectionné un mode de fonctionnement en brouillage du dispositif, correspondant au fonctionnement suivant le premier mode de réalisation, ou un mode de fonctionnement en leurrage, correspondant au deuxième mode de réalisation. L'interrupteur commandable est mobile entre une troisième et une quatrième position. Ainsi, le dispositif de géolocalisation résultant de cette combinaison est propre à transmettre le signal de brouillage en émission lorsque l'interrupteur est dans la troisième position et le signal de leurrage en émission lorsque l'interrupteur est dans la quatrième position.

En variante, les premier et deuxième modes de réalisation sont combinés entre eux au sein d'un même dispositif de géolocalisation et le générateur 20 des deuxièmes signaux S2 est propre à générer plusieurs deuxièmes signaux avec, au moins un deuxième signal qui est un signal de leurrage en émission et au moins un deuxième signal qui est un signal de brouillage en émission. Le signal de leurrage en émission et le signal de brouillage en émission ont, dans cette variante, des fréquences différentes et des spectres fréquentiels distincts.

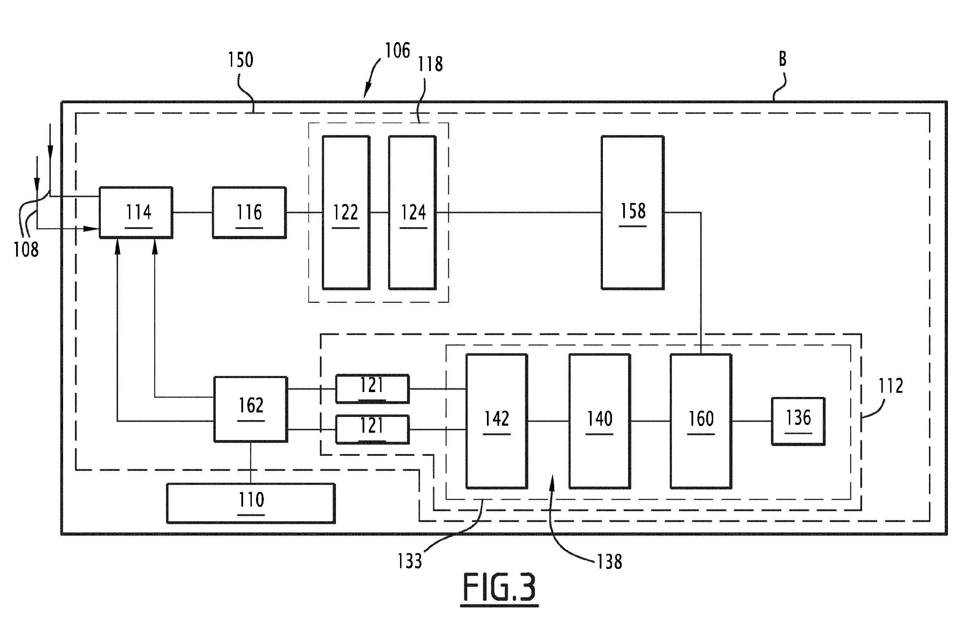

Dans un troisième mode de réalisation de l'invention, présenté à la figure 3, les éléments similaires à ceux du premier mode de réalisation portent les mêmes références augmentées de 100. Les différences entre le premier et le troisième mode de réalisation seront présentées par la suite et les éléments similaires entre le premier et le troisième mode de réalisation ne seront pas décrits à nouveau.

Dans le troisième mode de réalisation, le dispositif de géolocalisation 106 comprend plusieurs antennes globales 108, une unité de traitement 110 et un module d'antibrouillage 150.

Les antennes globales 108 forment à la fois des premières antennes de réception des premiers signaux S1 et des deuxièmes antennes d'émission des deuxièmes signaux S2. Les antennes globales 108 sont connectées électriquement au module d'antibrouillage 150.

Le module d'antibrouillage 150 est adapté, de manière connue en soi, pour éliminer un signal de brouillage en réception et/ou un signal de leurrage en réception compris dans le signal de géolocalisation reçu par les antennes globales 108.

Le module d'antibrouillage 150 est positionné en amont de l'unité de traitement 110. Le module d'antibrouillage 150 comprend un module de prétraitement 116, un module de numérisation 118 et une unité d'identification 158.

Le module d'antibrouillage 150 comprend également un module de génération 112 des deuxièmes signaux S2, un premier commutateur 114, un deuxième commutateur 160 et un troisième commutateur 162. Le module d'antibrouillage est donc adapté pour générer les deuxièmes signaux S2 qui correspondent, dans le cas du troisième mode de réalisation, au signal de brouillage en émission. Le module d'antibrouillage 150 remplit donc en plus de sa fonction première d'antibrouillage, une fonction de brouillage de récepteurs adversaires. Ainsi, le dispositif de géolocalisation 106 est adapté pour déterminer sa position, grâce à l'unité de traitement 110 et ceci de manière fiable, grâce au module d'antibrouillage 150. De plus, le dispositif de géolocalisation 106 est également apte à émettre le signal de brouillage en émission.

Le module de génération 112 est propre à générer les deuxièmes signaux, correspondant au signal de brouillage en émission. Les antennes globales 108 sont donc propres à émettre les deuxièmes signaux et ainsi à émettre le signal de brouillage en émission. Le module de génération 112 comprend un générateur 133 et des modules de modification 121.

Le premier commutateur 114 est positionné entre les antennes globales 108 et le module de prétraitement 116. Le premier commutateur 114 est mobile entre une première position, dans laquelle le premier commutateur 114 relie électriquement les antennes globales 108 à l'unité d'identification 158 et une deuxième position, dans laquelle le premier commutateur 114 relie électriquement les antennes globales 108 et le module de génération 112.

Le module de numérisation 118 comporte un module 120 de contrôle automatique de gain, dont la sortie est fournie en entrée d'un convertisseur analogique numérique 122.

Des sorties du module de numérisation 118 sont utilisées par l'unité d'identification 158 qui est adaptée pour identifier et éliminer un signal de brouillage en réception et/ou un signal de leurrage en réception compris dans le signal de géolocalisation SG reçu par les antennes globales 108.

Le générateur 133 inclut, par exemple, une mémoire 136 propre à mémoriser les deuxièmes signaux, c'est-à-dire à mémoriser des échantillons correspondants aux deuxièmes signaux, et un organe 138 de conversion. L'organe de conversion 138 comporte un convertisseur numérique analogique 140 et un module 142 de contrôle automatique de gain. Le module de contrôle de gain 142 est connecté en sortie aux modules de modification 121.

Chaque module de modification 121 est propre à être associé, c'est-à-dire connecté, à l'une des antennes globale 108. Les modules de modification 121 reçoivent chacun les deuxièmes signaux S2 générés par le générateur 133 et sont propres à modifier chacun le niveau du ou des deuxièmes signaux S2 différemment pour orienter la direction d'émission du ou des deuxièmes signaux par les antennes globales 108.

Le deuxième commutateur 160 est connecté, d'une part, à l'unité d'identification 158 et à la mémoire 136 et, d'autre part, à l'organe de conversion 138. Le deuxième commutateur 160 est mobile entre une cinquième position dans laquelle il connecte électriquement l'unité d'identification 158 à l'organe de conversion 138 et une sixième position dans laquelle il relie électriquement la mémoire 136 à l'organe de conversion 138.

Le troisième commutateur 162 est connecté, d'une part, au module de modification 121 et, d'autre part, à l'unité de traitement 110 et au premier commutateur 114.

Le troisième commutateur 162 est mobile entre une septième position dans laquelle il connecte électriquement le module de génération 112 au premier dispositif de commutation 114 et une huitième position dans laquelle il relie électriquement le module de génération 112 à l'unité de traitement 110.

Les premier 114, deuxième 160 et troisième 162 commutateurs forment un module de commutation mobile entre une première position globale et une deuxième position globale. Dans la première position globale, le module de commutation relie électriquement les antennes globales 108 à l'unité d'identification 158 et l'unité d'identification 158 à l'unité de traitement 110, afin que l'unité de traitement reçoive le signal de géolocalisation SG et détermine la position du dispositif de géolocalisation 106. En d'autres termes, dans la première position globale le module de commutation relie électriquement les antennes globales 108 au module d'antibrouillage 150 et à l'unité de traitement 110. Dans la deuxième positon globale, le module de commutation relie électriquement le module de génération 112 et notamment la mémoire 136 aux antennes globales 108, pour émettre le signal de brouillage en émission.

Les dispositifs de géolocalisation 6, 106 selon les premier et troisième modes de réalisation permettent généralement de générer et de transmettre le signal de brouillage en émission, c'est-à-dire plus généralement des signaux de brouillage vers les récepteurs adversaires pour priver l'adversaire d'informations sur sa position et/ou sur le temps dont il dispose. En effet, ils sont adaptés pour transmettre des deuxième signaux dont le spectre fréquentiel de brouillage inclut le premier spectre fréquentiel d'un ou de plusieurs des premiers signaux.

Par ailleurs, le dispositif de géolocalisation 6, selon le deuxième mode de réalisation, permet généralement de transmettre le signal de leurrage en émission, c'est-à-dire plus généralement des signaux de leurrage, vers des dispositifs de géolocalisation adversaires pour leurrer l'adversaire sur sa position et/ou sur le temps dont il dispose. En effet il génère des deuxièmes signaux dont les caractéristiques sont proches de certains premiers signaux, mais qui comprennent des données de leurrage.

Les dispositifs de géolocalisation 6, 106 selon les trois modes de réalisation, offrent à la fois une capacité de détermination de position du dispositif de géolocalisation et une capacité de brouillage et/ou leurrage. Les dispositifs de géolocalisation 6, 106 sont ainsi configurés pour remplir deux fonctions et intègrent des moyens de transmission du ou des deuxièmes signaux vers d'autres dispositifs de géolocalisation. Le ou les deuxièmes signaux forment le signal de brouillage en émission et/ou le signal de leurrage en émission et du fait de l'abondance du nombre de dispositif de géolocalisation 6, 106 sur un théâtre d'opération, par exemple militaire, les dispositifs de géolocalisation 6, 106 offrent des capacités de brouillage et de leurrage importantes, ainsi qu'une couverture du théâtre d'opération et une efficacité optimisée. En outre, les dispositifs de géolocalisation 6, 106 étant nombreux ils sont destinés à être de faible puissance, ce qui limite leur consommation et rend leur détection plus difficile pour un éventuel adversaire.

Les dispositifs de géolocalisation 6, 106 forment généralement un ensemble de dispositifs de géolocalisation adapté pour brouiller et/ou leurrer des dispositifs de géolocalisation adversaires de manière efficace.

Avantageusement, dans les trois modes de réalisation, le dispositif de géolocalisation transmet à des dispositifs de géolocalisation dits amis des informations relatives à une forme des deuxièmes signaux S2 et/ou à une fréquence ou un temps d'émission des deuxièmes signaux S2. Les dispositifs de géolocalisation dits amis sont alors propres à réaliser un filtrage temporel ou fréquentiel adaptatif pour ignorer les deuxièmes signaux S2.

En variante, non représentée, dans les premier et troisième modes de réalisation les dispositifs de géolocalisation 6, 106 permettent de générer un signal de leurrage. Dans cette variante, le module de génération 12, 112 comprend un premier organe de calcul d'au moins une deuxième porteuse et un deuxième organe de calcul d'au moins un deuxième code comprenant des bits identiques à ceux du premier code d'un premier signal correspondant. Le module génération 12 est alors adapté pour générer le ou les deuxièmes signaux S2 à partir de la modulation de la ou des deuxièmes porteuses par le ou les deuxièmes codes, pour que le ou les deuxièmes signaux aient la troisième fréquence F3, sachant que la troisième fréquence F3 est globalement similaire à la première fréquence F1 du premier signal de positionnement correspondant. Dans cette variante, le module de génération 12 comprend également un organe de détermination de données de leurrage pour chaque deuxième signal. Le module de génération est alors adapté pour générer le ou les deuxièmes signaux à partir des données de leurrage, de la ou des deuxièmes porteuses et du ou des deuxièmes codes. Le ou les deuxièmes signaux correspondent alors au signal de leurrage en émission.

Selon une autre variante, dans les trois modes de réalisation, le dispositif de géolocalisation 6, 106 comprend un premier module de sélection de premiers signaux S1 pour obtenir des premiers signaux sélectionnés. L'unité de traitement 10, 110 est alors propre à déterminer l'information de positionnement à partir des premiers signaux sélectionnés. Dans cette variante, le dispositif de géolocalisation 6, 106 comprend soit, dans un premier cas, un premier module de reconnaissance propre à identifier les premiers codes des premiers signaux S1 sélectionnés, soit, dans un deuxième cas, un deuxième module de reconnaissance propre à identifier la première fréquence des premiers signaux S1 sélectionnés.

Dans le premier cas, le module de génération 12, 112 calcule chaque deuxième signal S2 à partir d'un deuxième code différent des premiers codes correspondant aux premiers signaux sélectionnés. En d'autres termes, chaque deuxième signal S2 est obtenu à partir d'un deuxième code comprenant des deuxièmes bits de code différent des bits de codes des premiers codes identifiés. Ceci permet de garantir que les premiers signaux S1 pour lesquels on transmet le signal de leurrage correspondant ne sont pas utilisés par le dispositif de géolocalisation 6, 106 pour déterminer sa position.

Dans le deuxième cas, chaque deuxième signal S2 calculé par le module de génération 12, 112 présente une fréquence différente des premières fréquences identifiées. Dans cette variante, le premier module de sélection est, par exemple, configuré pour sélectionner des premiers signaux ayant une première fréquence égale à 1,5 GHz, c'est-à-dire que le module de prétraitement est adapté pour réaliser un filtrage et récupérer les premiers signaux dont la fréquence est égale à 1,5 GHz. Le module de génération 12, 112 calcule alors, par exemple, chaque deuxième signal S2 de manière à ce que chaque deuxième signal ait une fréquence, différente de 1,5 GHz, par exemple égale à 1,2 GHz. Ceci permet de garantir que les premiers signaux pour lesquels on transmet le signal de leurrage en émission ou le signal de brouillage en émission correspondant ne sont pas utilisés par le dispositif de géolocalisation 6, 106 pour déterminer sa position. En outre, le fait que les fréquences des premier et deuxième signaux soient différentes permet, suite à la mise en place d'un filtrage adapté, par exemple au niveau de la ou des antennes globales 8, 108, de réaliser simultanément la réception des premiers signaux et l'émission des deuxièmes signaux.

Selon une autre variante, dans les trois modes de réalisation présentés ci-dessus, le dispositif de géolocalisation 6, 106 comprend une ou des premières antennes de réception et une ou des deuxièmes antennes d'émission qui sont différentes. Le dispositif de géolocalisation 6, 106 est ainsi adapté pour simultanément transmettre le ou les deuxièmes signaux sous forme radioélectrique et recevoir le signal de géolocalisation, puisque le dispositif de géolocalisation 6, 106 comprend des antennes dédiées à la réception des premiers signaux et des antennes dédiées à l'émission des deuxièmes signaux.

Les modes de réalisations et variantes décrits ci-dessus sont aptes à être combinés les uns aux autres, totalement ou partiellement, pour donner lieu à d'autres modes de réalisation de l'invention.

## Revendications

1. Dispositif de géolocalisation (6 ; 106) adapté pour recevoir des premiers signaux radioélectriques de positionnement (S1) issus de satellites, chaque premier signal (S1) ayant une première fréquence (F1) et étant généré à partir d'un premier code propre au satellite dont le premier signal (S1) est issu, le dispositif (6 ; 106) comprenant :
- une première antenne (8 ; 108) propre à recevoir un signal de géolocalisation (SG) comprenant, de préférence, au moins trois des premiers signaux (S1) issus de trois satellites différents, et
- une unité de traitement (10; 110) propre à déterminer une information de positionnement du dispositif (6 ; 106) en fonction du signal de géolocalisation (SG) que la première antenne (8 ; 108) est propre à recevoir,
**caractérisé en ce que** le dispositif (6 ; 106) comprend également une deuxième antenne (8 ; 108) propre à émettre au moins un deuxième signal (S2), chaque deuxième signal (S2) étant soit un signal de brouillage en émission, soit un signal de leurrage en émission et présentant un spectre fréquentiel de brouillage ou leurrage comprenant au moins l'une des premières fréquences (F1).

2. Dispositif selon la revendication 1, dans lequel les premières fréquences (F1) sont comprises dans un intervalle de fréquence prédéterminé, le dispositif (60; 106) comprenant :
- un module de génération (12 ; 112) de signal propre à générer au moins un deuxième signal (S2) ayant une deuxième fréquence inférieure à toutes les premières fréquences (F1), et
- un module de modification (21 ; 121) de signal propre à modifier le deuxième signal généré pour que la fréquence du deuxième signal soit égale à une troisième fréquence comprise dans l'intervalle de fréquence prédéterminé.

3. Dispositif selon la revendication 2, comprenant, en outre :
- un module d'antibrouillage (150) propre à identifier et éliminer un signal de brouillage en réception et/ou un signal de leurrage en réception compris dans le signal de géolocalisation (SG) que la première antenne (108) est propre à recevoir,
- un module de commutation (114, 160, 162) mobile entre, une première position, dans laquelle la première antenne (108) est connectée électriquement au module d'antibrouillage (150) et à l'unité de traitement (110) et, une deuxième position, dans laquelle la deuxième antenne (108) est connectée au module de génération (112).

4. Dispositif selon l'une des revendications 1 à 3, dans lequel chaque premier signal (S1) présente un premier spectre fréquentiel et dans lequel chaque deuxième signal (S2) est un signal de brouillage en émission, le spectre fréquentiel de brouillage comprenant au moins un premier spectre fréquentiel.

5. Dispositif selon l'une des revendications 1 à 3, dans lequel chaque premier signal (S1) est obtenu à partir d'un signal intermédiaire résultant d'une combinaison entre d'une part, un signal de données, comprenant des données mémorisées par le satellite dont le premier signal (S1) est issu et à partir desquelles l'unité de traitement (10 ; 110) détermine l'information de positionnement, et, d'autre part, le premier code, puis par modulation d'une première porteuse par le signal intermédiaire, chaque premier code comprenant des premiers bits de code et présentant une première fréquence de code, et dans lequel chaque deuxième signal (S2) est un signal de leurrage en émission, généré à partir d'un deuxième code, le deuxième code comprenant des deuxièmes bits de code similaires aux premiers bits de code du premier code d'un premier signal correspondant (S1) et une deuxième fréquence de code égale à la première fréquence de code du premier code du premier signal correspondant (S1).

6. Dispositif selon la revendication 5, dans lequel l'unité de traitement (10 ; 110) est adaptée pour déterminer une première phase du premier code de chaque premier signal (S1) reçu par la première antenne (8 ; 108), et dans lequel chaque deuxième code présente une deuxième phase différente de la première phase déterminée pour le premier signal correspondant (S1).

7. Dispositif selon la revendication 5 ou 6, comprenant un organe (44) de détermination de données de leurrage, de valeurs différentes des données comprises dans le signal de données à partir duquel le premier signal correspondant (S1) est obtenu, chaque deuxième signal (S2) comprenant les données de leurrage.

8. Dispositif selon l'une des revendications 1 à 7, comprenant, en outre, un premier module de sélection de premiers signaux (S1) pour obtenir des premiers signaux sélectionnés, à partir desquels l'unité de traitement (10 ; 110) est propre à déterminer l'information de positionnement, et comprenant au moins l'un parmi :
- un premier module de reconnaissance propre à identifier les premiers codes des premiers signaux (S1) sélectionnés, chaque deuxième signal (S2) étant obtenu à partir d'un deuxième code différent des premiers codes identifiés, et
- un deuxième module de reconnaissance propre à identifier la première fréquence des premiers signaux (S1) sélectionnés, chaque deuxième signal (S2) présentant une fréquence différente des premières fréquences identifiées.

9. Dispositif selon l'une des revendications 1 à 8, comprenant un interrupteur commandable pour la sélection d'un mode de fonctionnement du dispositif en brouillage ou en leurrage, l'interrupteur commandable étant mobile entre, une troisième position, dans laquelle chaque deuxième signal (S2) est un signal de brouillage en émission et, une quatrième position, dans laquelle chaque deuxième signal (S2) est un signal de leurrage en émission.

10. Ensemble de dispositifs de géolocalisation (6 ; 106), **caractérisé en ce que** les dispositifs de géolocalisation (6 ; 106) sont selon l'une des revendications 1 à 9.
